# EUROPEAN PATENT APPLICATION

(11) **EP 1 659 756 A1**
(43) Date of publication of application: **24.05.2006**
(21) Application number: 05290742.5
(22) Date of filing: 04.04.2005
(51) Int. Cl.: H04L 29/06, H04Q 7/28

(54) **Method of performing a push to talk (PTT) communication service**

(30) Priority: 17.11.2004 US 989284
(71) Applicant: ALCATEL, 75008 Paris (FR)
(72) Inventor: Kopp, Dieter, 75428 Illingen (DE); Wengrovitz, Michael S., Concord, Mass. 01742 (US)
(74) Representative: Brose, Gerhard

(57) **Abstract**

The present invention relates to a push-to-talk server (6) and a method of performing a push-to-talk based communication service for registered users (21, 25 to 28) of a push-to-talk service. A push-to-talk call request is transmitted from a calling terminal (31) to the push-to-talk server (6), the push-to-talk call request requesting the establishment of a half-duplex communication connection to one or more called users (25 to 28) and/or user groups. The push-to-talk server (6) establishes an IP based streaming communication channel between the calling terminal (31) and a speech-to-text converter (74). A push-to-talk voice input is transmitted by said communication channel (91) from the calling terminal to the speech-to-text converter (74). The speech-to-text converter (74) converts the push-to-talk voice input to a text. Then, the push-to-talk sever (6) creates a message (92 to 94) containing the content of said text and transfers the message (92 to 94) to one or more of the called users (25 to 27) and/or user groups.

## Description

The present invention relates to a method of performing a push-to-talk based communication service for registered users of a push-to-talk service and to a server for providing a push-to-talk service within a communication network.

Today, cellular radio networks are widely used by private and business users. Such networks typically provide a full duplex point-to-point voice communication service. Enhanced cellular phones are equipped with additional functionalities to support the transfer of data traffic via cellular radio networks. Services as general packets radio services (= GPRS) support the transfer of packet switched data through the cellular radio network.

Additionally, private land mobile radio services (= PLMRS) are used by user groups such a business and public service organisations for a wide range of operations. For example, such services are used for activity coordination in the field of building maintenance, security or medical services. All users of a common group in a PLMRS system share the same frequency channel. The PLMRS service provides simplexvoice communication between the users in a group. The same frequency channel is used for both directions of conversation, with a push-to-talk button being used to activate the transmitter when a user wishes to call another user or to respond within a conversation. These services provide a "push-to-talk" radio functionality wherein a group of users are linked via a shared communication medium and the right to talk is allocated by a "push-to-talk" button.

The object of the present invention to improve the performance of push-to-talk communication service within enhanced communication systems.

The present invention is achieved via a method of performing a push-to-talk based communication service for registered users of a push-to-talk service, wherein the method comprises the steps of:
- transmitting a push-to-talk call request from a calling terminal to a push-to-talk server, the push-to-talk call request requesting the establishment of a half-duplex communication connection to one or more called users and/or user groups;
- establishing an IP based streaming communication channel between the calling terminal and a speech-to-text converter;
- transmitting a push-to-talk voice input via said communication channel from the calling terminal to the speech-to-text converter and converting the push-to-talk voice input to a text;
- creating a message containing the content of said text; and
- transferring the message to one or more of the called users and/or user groups.

The object of the present invention is further achieved by a server for providing a push-to-talk service for registered users of the push-to-talk service within a communication network, wherein the server comprises a call control unit, the call control unit establishes an IP based streaming communication channel between a calling terminal and a speech-to-text converter based on a push-to-talk call request from the calling terminal, wherein the push-to-talk call request requests the establishment of a half-duplex communication connection to one or more called users and/or user groups and the call control unit controls the conversion of a push-to-talk voice input transmitted via the communication channel to a text, creates a message containing the content of the text, and transfers the message to one or more of the called users or user groups.

Accordingly, the invention proposes to emulate an IP-based push-to-talk service applying a speech-to-text converter to the push-to-talk voice input. Thereby it becomes possible to have a modality conversion in a push-to-talk environment that enables multi-modal interaction and new, attractive mobile communication services. The approach improves the and effectiveness of push-to-talk dialogues, improves the attraction of such half-duplex traffic applications and therefore improves the overall functionality of a wireless communication network. Further, it enhances the possibilities to personalise push-to-talk services and to apply push-to-talk services to various applications.

Further advantages are achieved by the embodiments of the invention indicated by the dependent claims.

According to a preferred embodiment of the invention, one or more applications are registered as users of the push-to-talk service. Applicants of similar functionality are grouped as a push-to-talk group or talk group. If the push-to-talk server detects the receipt of a push-to-talk call request specifying one or more called users or user groups represented by one or more registered applications, it creates a service request message containing the content of the text presented by the speech-to-text converter. Then, it invokes the one or more applications representing the called users by means of the created service request messages. It invokes one or more services based on the recognition results and the grouping of the push-to-talk service. Thereby, it uses the text output of the speech-to-text converter to control the one or more applications. Such approaches enhance the capability of the push-to-talk service and provide a central point of communication serving various user needs. Further it is possible that a push-to-talk call request specifies both users represented by registered application as well as users that are "human" users and addressed via their respective cellular phone.

Preferably, the push-to-talk service stores user profile data of one or more applications registered as users of the push-to-talk service. For example, it stores application interface information of applications registered as users of the push-to-talk service. Further, it stores speech recognition related data indicating the speech recognition requirements of the respective application. Further, it stores context data and semantically information enabling the push-to-talk server to improve the content of the service request message.

Preferably, the push-to-talk service stores in addition to such application specific user profiler data general user profile data which it holds for both, "human" users and users represented by applications. For example, it stores user preference data fordefining for one or more registered users of the push-to-talk service whether the respective user shall receive a push-to-talk voice communication as voice or text.

Furthermore, user profile data stores additional classes of data adapted to the needs of human users. For example, it stores the speech recognition adaptation date of one or more registered users of the push-to-talk service which are used to parameterise the speech-to-text conversion.

Various advantages are achieved by the application of such user profile data.

To improve the speech-to-text conversion process, the push-to-talk server checks whether speech recognition adaptation data is stored in the user profile of the calling user. If such speech recognition adaptation data isavailable for the calling user, it uses this data to select an appropriate speech-to-text converter and to parameterise the selected speech-to-text converter. For example, speech recognition adaptation data holds data about user preferences with respect to speech-to-text converters and parameterisation data as spectral shifts and phoneme sets used to personalise the preferred speech-to-text converter.

According to a further embodiment of the invention, the push-to-talk service selects appropriate speech-to-text converter out of a set of different types to speech-to-text converters based on preference data and application context data of the application representing the called user.

According to a further embodiment of the invention, the push-to-talk server accesses user profile data of an application representing a called user to create a service request message for this application. It uses application interface information of this application and corresponding semantical information to create an appropriate service request and to arrange the content of the text output of the speech-to-text converter in an appropriate way. Further it accesses user profile data of the calling user and supplements the content of the service request message by means of preference data of the calling user. This approach improves the flexibility and user-friendliness of the push-to-talk service.

Preferably, the called user determines whether or not to receive a push-to-talk voice communication as voice or text. The push-to-talk server checks for each called user of the push-to-talk call request whether or not this user has indicated in its user profile to prefer voice or text communication. In the one case, the push-to-talk server establishes an IP based streaming communication channel between the calling terminal and the terminal of the respective called user. In the other case, it establishes and IP based streaming communication channel between the calling terminal and the speech-to-text converter. If a push-to-talk call request requests the establishment of a push-to-talk communication connection to different users with different preferences, the push-to-talk server in parallel establishes IP based streaming communication channels to one or more terminals and to one or more speech-to-text converters, wherein the push-to-talk voice output is transferred in parallel to said terminals and said speech-to-text converters.

In an alternate embodiment, the calling user specifies whether a push-to-talk voice output shall be transferred as voice or text. For example, the user depresses a specific push-to-talk button at his terminal thereby indicating a "push-to-text" handling of the push-to-talk voice input.

These as well as other features and advantages of the invention will be better appreciated by reading the following detailed description of presently preferred exemplary embodiments taken in conjunction with the accompanying drawings, of which:
- Fig. 1: is a block diagram that shows a wireless communication system with a push-to-talk server and a plurality of wireless terminals.
- Fig. 2: is a block diagram showing a push-to-talk server and various users of a push-to-talk service for exemplifying a further embodiment of the invention.

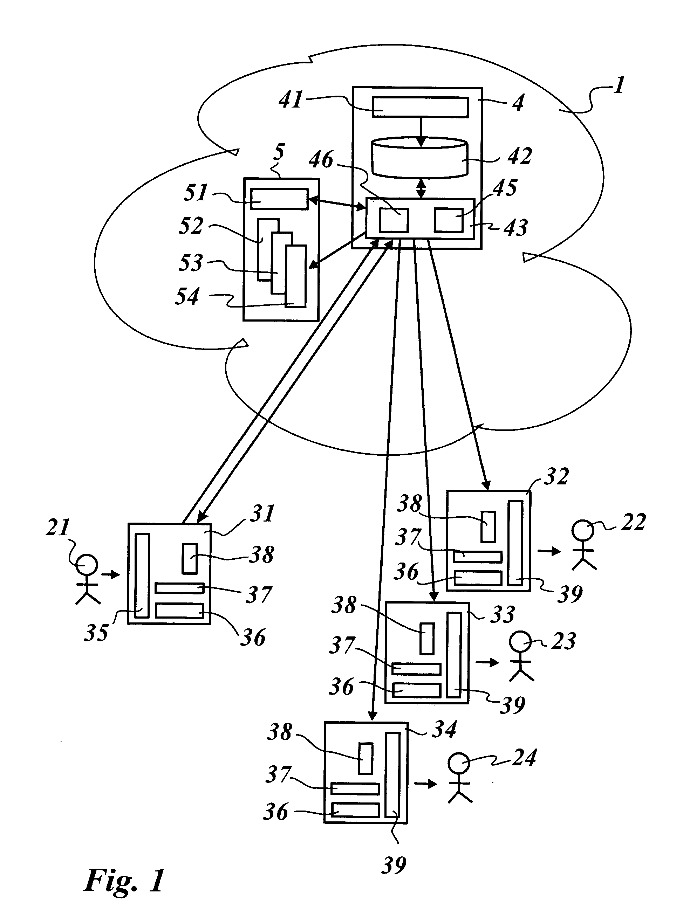

Fig. 1 shows a wireless communication network 1, a push-to-talk server 4, a voice recognition server 5 and a plurality of wireless terminals 31 to 34.

The wireless communication network 1 is a communication systems that provides a wireless, IP based communication service (IP = Internet Protocol). Preferably the communication network 1 is a cellular radio network, for example a GSM or UMTS network (GSM = Global System for Mobile Communication; UMTS = Universal Mobile Telecommunications System) which supports the transfer of packet information via "always on" connections. For example, the wireless communication network 1 is a GSM network supporting a GPRS service (GPRS = General Packet Radio Service) which makes it possible for the wireless terminals 31 to 34 to exchange in addition to "normal" voice traffic packet switched data traffic via the radio interface. But, it is also possible that the wireless communication network 1 is another kind of wireless communication network supporting an IP based packet switching service, for example a UMTS, EDGE or 4G network.

According to a further embodiment of the invention, the wireless communication network 1 is formed by different sub-networks capable to exchange IP based traffic via a radio interface. For example, such sub-networks are wireless LAN or different kinds of cellular radio networks.

According to a further embodiment of the invention, the wireless communication network 1 is replaced by a wired communication network supporting an IP based packet switching service.

The voice recognition server 5 is constituted by an electronic circuit containing on or more microprocessors and digital signal processors and various software programs executed by these microprocessors and digital signal processors. The functionalities of the voice recognition server 5 are provided by the execution of these software programs on the hardware platform provided by the electronic circuit. From functional point of view, the voice recognition server 5 comprises a controller 51 and various speech-to-text converters, wherein Fig. 1 shows three of these, namely speech-to-text converters 52 to 54.

The controller 51 administrates the set of speech-to-text converters hosted by the voice recognition server 5 and provides a control interface towards the push-to-talk server 4. Preferably, the voice recognition server 5 holds different types of speech-to-text converters, for example simple ones for pure number recognition, more complex ones for command and control voice recognition tasks with a reduced thesaurus and enhanced ones with enlarged knowledge basis and sophisticated statistical calculation tools. But, it is also possible that the voice recognition server 5 provides a set of identical speech-to-text converters.

Further, it is possible that the voice recognition server 5 is constituted by a bundle of various, locally distributed severs. For example, each one of the severs hosts one or several voice recognisers which are centrally or decentrally controlled by one or more controllers 51.

The push-to-talk server 4 is constituted by one or several interlink computers, a software platform and various application programs executed based on the system platform provided by the aforementioned hardware and software platform. The functionalities of the push-to-talk server 4 are performed by the execution of these software components by the hardware components of the push-to-talk server 4. From functional point of view, the push-to-talk server 4 comprises a call control unit 43, an administration unit 41 and a data base 42.

The data base 42 contains a subscriber data set for each individual user of the push-to-talk service provided by the push-to-talk sever 4. Each subscriber data set contains contact data of the respective user, for example a network address and/or an IP address or a SIP address of a wireless terminal assigned to the respective user (SIP = Session Initiation Protocol). Further, the subscriber data set contains subscriber data specifying, for example, the name of the respective subscriber and a user profile of the respective subscriber.

The user profile contains data to assign the respective subscriber to one or more push-to-talk groups or talk groups. Optionally, the subscriber profile contains speech recognition adaptation data of the respective user specifying, for example, spectral shifts and a set of phonemes to enable a personalised speech recognition and adapt speech recognition at the speech behaviour of the respective user. Further, the user profile contains a flag indicating whether the respective user shall receive a push-to-talk voice communication as voice or text.

The administration unit 41 provides an access interface to register and enrol users of the push-to-talk services which enables these users to change and administrate their subscriber data stored in the data base 41.

The call control unit 42 establishes IP based half-duplex communication channels between the wireless terminals 31 to 34 and the push-to-talk server 4 based on a push-to-talk call request received from one of these terminals.

Push-to-talk calls are one-way, one-to-one or one-to-many communications: While one person speaks, the other person has to listen. The right to speak is granted by pressing a push-to-talk button on a first come / first serve basis. When detecting the actuation of a push-to-talk key, the terminal transmits a push-to-talk call request to the control unit 43.

The control unit 43 establishes and reconfigures IP based communication channels between subscribers enrolled in the data base 42 on a first come / first serve basis preferably without awaiting the response upon the establishment or reconfiguration of the communication channel. Further, the call control unit 43 checks for each users indicated in a push-to-talk call request as called user whether a flag in the user profile of this user indicates that this user shall receive push-to-talk communications via text. If the call control unit 43 recognises such request to transfer push-to-talk communications as text, it establishes an IP based streaming communication channel between the calling wireless terminal and one of the text-to-speech converters 52 to 54 of the voice recognition server 5. Then, it exchanges control messages with the controller 51 to initiate the conversion of the push-to-talk input received via this communication channel to a text, creates a message containing the content of the text and transfers this message to the one or more called users which have indicated in their user profiles to receive push-to-talk communications as text message.

The wireless terminals 31 to 34 are cellular phones which are equipped with additional functionalities to support - besides the "normal" cellular phone service - a push-to-talk service similar to the aforementioned private land mobile radio services.

Each of the wireless terminals 31 to 34 are composed of an electronic circuit having a radio part and at least one microprocessor, as well as application programs executed by the at least one microprocessor, and input and output means, for example a microphone, a loud-speaker, a keypad and a display. The functionalities of the wireless terminals 31 to 34 are performed by the interaction of these hardware and software components. From functional point of view, the mobile terminals 31 to 34 comprise an input unit 35, an output unit 39, a radio communication unit 36, a packet radio service unit 37 and a push-to-talk client 38.

The radio communication unit 36 represents the "normal" radio communication capabilities of a cellular phone and comprises, for example, the part of the wireless terminal 31 that handles the radio interface and the associated GSM protocol stack. The radio communication unit 36 provides the "normal" telephone service of a GSM or UMTS hand set.

The packet radio service unit 37 represents the functionalities of the wireless terminal which supports exchange of packet-switched data through the wireless communication network 1. For example, the packet service unit comprises functionalities for handling the GPRS protocol stack. Accordingly the packet service unit 37 provides corresponding packet transfer services to the push-to-talk client 38.

The push-to-talk client 38 handles the client's part of the push-to-talk service. If the user initiates a push-to-talk communication, e.g. by activating a push-to-talk button, it sends a corresponding push-to-talk call request to the push-to-talk server 4. Further, the push-to-talk client 38 comprises functionalities to transfer an audio stream via an IP based communication network, for example, functionalities to handle the RTP and the SIP protocol stacks. Further, it comprises a corresponding media player to input/output an audio stream.

For example, users 21 to 24 are assigned to the wireless terminals 31 to 34. The users 21 to 24 are registered as users of the push-to-talk service provided by the push-to-talk server 4 at the data base 42. The users 22 to 24 have joined a common talk group and the membership of the terminals 32 to 34 has been registered in the database 42. Further, the users 21 to 24 are members of a push-to-talk group, for example represent the staff of a building maintenance service.

The user 21 selects person, talk group or push-to-talk group from a list of available persons, talk groups and push-to-talk groups displayed at the display of the wireless terminal 31. Preferably, the push-to-talk client 38 sends a message to the call control unit 43 of the push-to-talk sever 4 and requests the submission of information about all or a part of available users, talk groups and push-to-talk groups available for the user 21. But, it is possible that this information is part of a personal phone book of the user 21 hold by the wireless terminal 31. When the push-to-talk client 38 detects the selection of a user, a talk group or a push-to-talk group, it signals a corresponding push-to-talk call request to the call control unit 43 of the push-to-talk server 4.

When receiving the push-to-talk call request from the wireless terminal 31, the call control unit 43 determines whether it has to transfer the push-to-talk communication as voice or text communication to the respective called users. For example, the user 21 selected within the push-to-talk request the talk group joined by the users 21, 23 and 24. The user 22 has indicated in its user profile to receive push-to-talk communications as text message and the users 23 and 24 have indicated in their user profile to receive such communications as voice communication. The call control unit 43 contacts the controller 51 and arranges the allocation of one of the speech-to-text converters 52 to 54 to this push-to-talk communication. For example, the speech-to-text converter 54 is allocated to this communication. Then, the control unit 43 initiates the establishment of an IP based streaming communication channel between the wireless terminal 31 and the speech-to-text converter 54 as well as to the wireless terminals 33 abd 34 assigned to the users 23 and 24. The call control unit 43 accesses the database 42 and searches for the communication addresses, e.g. SIP address of the terminals assigned to users 23 and 24 for the establishment of such communication connections.

The call control unit 43 initiates via the SIP protocol (SIP = Session Initiation Protocol) the establishment of a one-way, i.e. half-duplex, streaming channel between the wireless terminal 31 and the push-to-talk server 4, between the push-to-talk ever 4 and the speech-to-text converter 54 and between the push-to-talk sever 4 and each of the wireless terminals 33 and 34. A bridge unit 45 of the call control unit 43 controls the forwarding and copying of media streams received via the incoming streaming channel of the IP based communication connection towards the outgoing streaming channels of the IP based communication connection, e.g. towards the speech-to-text converter 54 and towards the terminals 33 and 34.

A message generator 46 receives the text output of the speech-to-text converter 54 and creates one or more messages containing the content of the text. For example, the message generator 46 awaits a predefined number of words, sentences or a predefined time and creates in the following a text-message containing the content of the text received within this time frame. Then, it transfers the message to the terminal 32 via a general message service, e.g. a short-message service, or via a specific message format of the push-to-talk service handled by the push-to-talk client 38. According to this concept, the content of the push-to-talk communication is successively transferred by a bunch of text messages towards the user 22.

But, it is also possible that the message creator 46 awaits the whole push-to-talk input and creates a single text-message containing the content of this voice input.

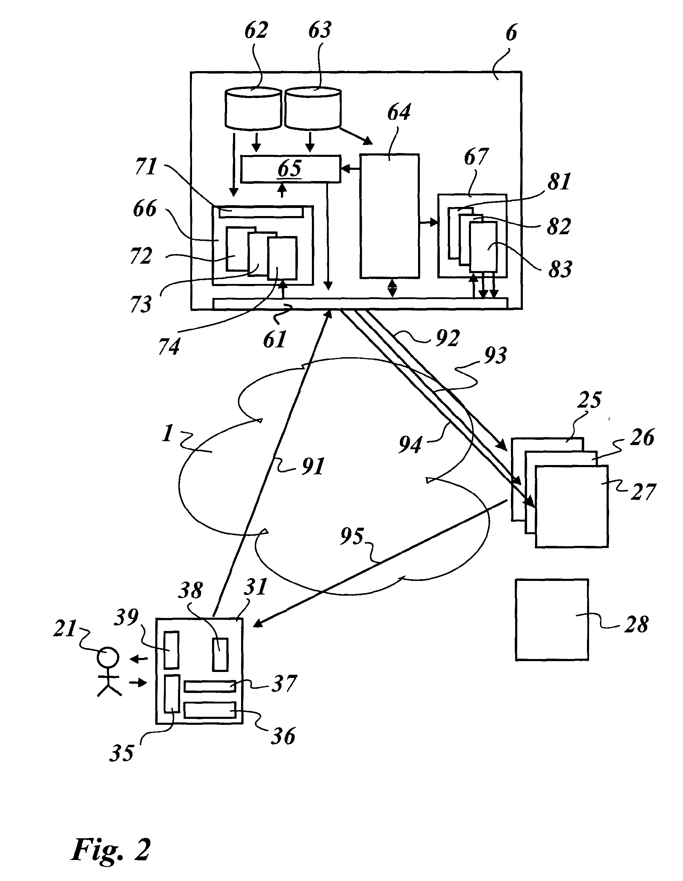

Further embodiments of the invention are exemplified in the following by hand of Fig. 2.

Fig. 2 shows the communication network 1, the wireless terminal 31 with the input unit 35, the output unit 39, the push-to-talk client 38, the packet radio service unit 37 and the radio communication unit 36, a push-to-talk sever 6 and a plurality of applications 25 to 28.

In contrast to the embodiment of Fig. 1, not only "human" users are registered and enrolled as users of the push-to-talk service provided by the server 6, but additionally a bunch of applications are registered as users of the push-to-talk service provided by the push-to-talk server 6.

The communication network 1 provides in addition to wireless communication services also fixed network, IP based communication services, for example for interlinking the applications 25 to 28 with the push-to-talk server 6.

The push-to-talk server 6 is constituted by a one or several interlinked computers and various software programs executed by these computers. From functional point of view, the push-to-talk sever 6 comprises a database which contains user profile data, for example user profile data 62 and 63, an interface unit 61, a voice recognition unit 66, a message generator 65, a controller 64 and a bridging unit 67.

The database of the push-to-talk server 6 contains a subscriber data set for each individual user of the push-to-talk service containing the data already exemplified by hand of the database 42 according to Fig. 1.

Additionally, it contains preference data of one or more registered "human" users as well as application interface information and voice recognition related context and preference data of applications representing registered users of the push-to-talk service.

This concept is in the following exemplified by hand of the embodiment according to Fig. 2, wherein the user profile data 62 represents the user profile data of the calling user 21 and the user profile data 63 represents the user profile data of the called users, i.e. of the applications 25 to 27.

The applications 25 to 27 are, for example, applications providing information services or search engines. The applications 25 to 27 provide similar services and join a common user group, for example are information services providing a weather forecast or traffic information. The applications 25 to 28 are hosted by one or more servers connected with the push-to-talk server 6 via the communication network 1.

The controller 64 of the push-to-talk server 6 receives a push-to-talk call request from the wireless terminal 31 via the interface unit 61. The push-to-talk call request requests a push-to-talk communication with the user group represented by the applications 25 to 27. The controller 64 accesses the user profile data 63 of the called users which indicates that the called users wish to receive the push-to-talk communication as text. Based on such query result, the controller 64 triggers the voice recognition unit 66 and the message generator 65 and initiates the establishment of a half-duplex IP based streaming communication channel 91 between the wireless terminal 31 and the push-to-talk server 6.

The voice recognition unit 66 is constituted by an assembly similar to the voice recognition server 5 of Fig. 1 and comprises a controller 71 and a set of speech-to-text converters 72 to 74.

When receiving an invocation of the controller 64, the controller 71 selects an appropriate one of the speech-to-text converters 72 to 74 and allocates this speech-to-text converter to the respective push-to-talk communication. The controller 71 holds a list indicating the status of the speech-to-text converters, i.e. whether the respective speech-to-text converter is already assigned to a push-to-talk communication and therefore blocked or whether such speech-to-text converter is a "free" state and available for allocation. The controller 71 accesses the user profile data 62 of the calling user as well as the user profile data 63 of the called users to perform the selection process. It compares the information of the user profiles 62 and 63, i.e. preferences of the calling and called users indicating appropriate speech-to-text converters and context information of the called user giving information about the voice recognition task to be performed for the push-to-talk communication, with capability data of the speech-to-text converters administrated by the controller 71. The controller 71 accesses these data and selects that one of the speech-to-text converters that is in the best position to perform the coming voice recognition tasks. Then, it allocates this speech-to-text converter, for example the speech-to-text converter 74, to the push-to-talk communication, downloads speech recognition adaptation data of the calling user to the speech-to-text converter 74 and informs the controller 64 about the allocation result.

The controller 71 submits the text output of the speech-to-text converter 74 to the message generator 65. The message generator 65 accesses the user profile data 62 of the calling user as well as the user profile data 63 of each called user to generate an appropriate service request message 92 to 94 for each of the applications 25 to 27. The message generator 65 uses the application interface data of the respective user profiles to formulate a service request message adapted on the application interface of the respective application and arrange the text output of the speech-to-text converter 74 in a synactical and semantical correct way within this service request message. Further it searches the user profile data 62 of the calling user for user preference data which and further user specific data, e.g. the geographical position of the user, might supplement the content of the text output, and add this information in a synactical and semantical correct way in the service request message.

The message generator 65 executes this process for each of the called users, i.e. for each of the applications 25 to 27 and thereby generates the service request messages 92 to 94, which could have a total different from. Then, it forwards these messages via the interface unit 61 through the communication network 1 to the applications 25 to 27, respectively.

For example, the applications 25 to 27 are software agents which are parameterised by the service request messages 92 to 94 to seek, for example, for information about a specific article or other subject. As soon as one of these software agents comes to a result, it replies a response 95 to the user 21, preferably by means of the push-to-talk service provided by the push-to-talk server 6.

If the controller 64 determines that one or more of the called users is interested in receiving the push-to-talk communication as voice communication, it triggers the bridging unit 67 which initiates the forwarding of IP packets as performed by the bridging unit 45 according to Fig. 1. The bridging unit 67 holds a plurality of bridging process wherein Fig. 2 shows the bridging processes 61 to 63. If, for example, the push-to-talk call request requests in addition to the push-to-talk communications to the applications 25 to 27 further push-to-talk communications to the users 23 and 24 of Fig. 1, the bridging unit 67 creates a bridging process, for example the bridging process 63, which in parallel forwards the push-to-talk communication to the terminals 33 and 34.

## Claims

1. A method of performing a push-to-talk based communication service for registered users (21 to 28) of a push-to-talk service, the method comprising the steps of:
transmitting a push-to-talk call request from a calling terminal (31) to a push-to-talk server (4, 6), the push-to-talk call request requesting the establishment of a half-duplex communication connection to one or more called users (22 to 27) and/or user groups;
establishing an IP based streaming communication channel between the calling terminal (31) and a speech to text converter (52 to 54, 72 to 74); transmitting a push-to-talk voice input via said communication channel from the calling terminal (31) to the speech-to-text converter (52 to 54, 72 to 74) and converting the push-to-talk voice input to a text;
creating a message (92, 93, 94) containing the content of said text; and
transferring the message (92 to 94) to one or more of the called users (22 to 27) and/or user groups.

2. The method of claim 1,
**characterized in**
**that** the method comprises the further step of additionally establishing IP based streaming communication channels between the calling terminal and one or more the called users and/or user groups and transferring the push-to-talk voice input in parallel via these communication channels to said one or more of the called users and/or user groups.

3. The method of claim 1,
**characterized in**
**that** the method comprises the further steps of: storing user profiler data (72) which contain speech recognition adaptation date of one or more registered users (21) of the push-to-talk service; and applying the corresponding speech recognition adaptation date to the speech-to-text conversion, when detecting a push-to-talk call request receipt from one of these users.

4. The method of claim 1,
**characterized in**
**that** the method comprises the further steps of: storing user profile data (63) which define whether a respective user shall receive a push-to-talk voice communication as voice or text; and establishing an IP based streaming communication channel between a calling terminal and a terminal of a called user or between a calling terminal and the speech-to-text converter (72 to 74) dependent on said user profile data (63).

5. The method of claim 1,
**characterized in**
**that** the method comprises the further step of: transferring an indication to the push-to-talk server (4) which requests the transmission of the corresponding push-to-talk voice input as text message to one or more of the called users (22 to 24) and/or user groups, wherein the indication is caused by the activation of a corresponding push-to-talk button at the terminal (31).

6. The method of claim 1,
**characterized in**
**that** the method comprises the further steps of: registering one or more applications (25 to 28) as users of the push-to-talk service; creating a service request message (92 to 94) containing the content of said text, if one or more called users and/or user groups of the push-to-talk call request are represented by one or more registered applications (25 to 28); and invoking an application (25 to 27) which represents a called user by means of said service request message (92 to 94).

7. The method of claim 6,
**charactetized in**
**that** the method comprises the further steps of: storing user profile data (63) which contain application interface information of one or more applications (25 to 28) registered as users of the push-to-talk service; and applying the application interface information of a called application to the creation of an appropriate service request message (92 to 94) adapted to invoke the respective application (25 to 27).

8. The method of claim 6,
**characterized in**
**that** the method comprises the further steps of: storing user profile data (62) which contain user preference data of one or more registered users (21) of the push-to-talk service; and creating the service request message (92 to 94) based on the content of the text and the user preference data of the calling user.

9. The method of claim 6,
**characterized in**
**that** the method comprises the further step of: selecting an appropriate speech-to-text converter (72 to 74) out of a set of speech-to-text converters (72 to 74) based on user profile data (63) of an application representing a called user, wherein the set to speech-to-text converters comprises different types of speech-to-text converters (72 to 74).

10. A server (4, 6) for providing a push-to-talk service for registered users of the push-to-talk service within a communication network (1), the server (4, 6) comprising a call control unit (43, 64) for establishing an IP based streaming communication channel between a calling terminal (31) and a speech-to-text converter (52 to 54; 72 to 74) based on a push-to-talk call request from the calling terminal (31), the push-to-talk call request requesting the establishment of a half-duplex communication connection to one or more called users (22 to 27) and/or user groups, for controlling the conversion of a push-to-talk voice input transmitted via said communication channel to a text, for creating a message (92 to 94) containing the content of the text, and for transferring the message (92 to 94) to one or more of the called users (22 to 27) or user groups.
